**Europäisches Patentamt**

**European Patent Office**

**Office européen des brevets**

(19)

(11) Publication number:

**0 074 185**

**B1**

(12) **EUROPEAN PATENT SPECIFICATION**

(45) Date of publication of patent specification: **20.11.86**

(21) Application number: **82304234.6**

(22) Date of filing: **11.08.82**

(51) Int. Cl.⁴: **A 23 L 1/31,** A 23 L 1/04, A 23 J 3/00

(54) Drape or wrap for a roasting joint and method for making the same.

(30) Priority: **09.09.81 GB 8127302**

(43) Date of publication of application:
**16.03.83 Bulletin 83/11**

(45) Publication of the grant of the patent:
**20.11.86 Bulletin 86/47**

(84) Designated Contracting States:
**BE DE FR IT NL SE**

(56) References cited:
**GB-A-1 296 420**
**US-A-3 622 353**
**US-A-3 664 849**

(73) Proprietor: **Holt, Alan**
**11 Manor Road**
**Salford, M6 8QN (GB)**

(72) Inventor: **Holt, Alan**
**11 Manor Road**
**Salford, M6 8QN (GB)**

(74) Representative: **Daunton, Derek**
**Barlow, Gillett & Percival 94, Market Street**
**Manchester M1 1PJ (GB)**

EP 0 074 185 B1

Courier Press, Leamington Spa, England.

## Description

This invention concerns a drape or wrap for a roasting joint and a method of making the same.

It is general routine practice, within the retail meat industry, in the preparation and dissection of bovine meat carcasses, to set aside suitable parts of the external soft fat tissue part of the meat for subsequent use as a drape or wrap to cover the external surface of lean meat roasting joints.

Two benefits arise from this, in that the fat aids the subsequent culinary process and its practical use aids costing value.

There are, however, several factors the operator has to consider carefully in relation to dealing with the fat component of carcasses in this way, namely: does he spend valuable time and labour in cutting and trimming the pieces of fat into the required shape, length, width, and thickness by hand; or does he provide expensive machinery for what amounts to a very small part to the overall operation? The usual answer is that he would prefer to do it by hand, but only if he has time to spare. The result is that it becomes spasmodic and not part of a considered practice.

A dressed carcass of beef contains, on average, about 12% of external and subcutaneous soft fat of which, due to the irregular shape, only some 2% is suitable for use in draping, and will contain on an average about 18% of waste bone and other unsaleable components, these percentages being by weight.

Accordingly, starting with a carcass weighing, for instance, 700 lbs (approx. 318 kilos), the discarding of the unsaleable components and all but 2% of the fat would reduce the carcass to 504 lbs (approx. 229 kilos) of saleable meat, which represents a 28% reduction in the useful weight of the carcass and is tantamount to an effective increase in the basic cost of about 39%.

On the other hand, if substantially all of the fat part of the meat can be retained as useful saleable product, the discarding only of the unsaleable components will reduce the 700 lb (318 kilos) carcass only by 18% to 574 lbs (261 kilos) of saleable meat which represents only an affective increase of 22% in the basic cost.

Accordingly, it will be appreciated that the discarding of all but 2% of the fat can involve an increase of about 17% in the cost of the saleable meat for its aggregate to be equal to the cost of the dressed carcass, as compared with the case where all of the fat can be included in the saleable meat.

An object of the present invention is to provide a drape or wrap for a roasting joint, the construction and production of which enables substantially the totality of the fat of a carcass to be usefully employed, thereby enabling the economies evident from the above discussion to be achieved.

In addition to the foregoing, it is to be mentioned that hitherto it has not been possible to make use of or process the fat component of meat derived from poultry and game as a drape or wrap. A further object of the invention is to provide a drape or wrap which can be produced using fat from poultry or game. Accordingly, when used herein the term "animal" is intended to include poultry and game.

With the above-discussed objects in view, the present invention provides a drape or wrap for a roasting joint comprising an element of animal fat, characterised in that it comprises a support or facing layer of collagen film or membrane serving as a carrier for and to which is adhered a fat layer comprising animal fat ground and/or chopped or similarly treated to reduce it to particulate form, the collagen, layer imparting integrity to the product.

The fat layer may include one or more additives such as colourings, seasonings, spices and flavourings.

The drape or fat of the invention may comprise only the collagen support or facing layer and the fat layer. Then, the product may be prepared in sheet-like elements e.g. for subsequent cutting up to desired sizes for use. In this event, where it is required to be able to superimpose such elements upon one another, e.g. for handling, packaging, storage and so on, adhesion together of the elements can be avoided by the provision, between the adjacent elements, of separating sheets, e.g. of so-called "release paper", such as a silicone impregnated paper.

Preferably, however, the drape or fat comprises two of said support or facing layers of collagen film or membrane between which is sandwiched a filling of animal fat ground and/or chopped or similarly treated to reduce it to particulate form, which filling constitutes the fat layer.

Then, the product may be produced in the form of a continuous strip or web from which a user (e.g. a butcher) can take appropriate lengths or pieces for use as drapes or wraps on joints.

The particulate fat is preferably admixed with a stabilizer and/or an antioxidant.

Additives, such as colourings, seasonings, spices and flavourings may also be included in the fat mass.

The fat mass may be extruded onto the collagen layer.

If desired, the fat mass may be introduced as a filling layer sandwiched between a pair of the collagen layers.

The extrusion is conveniently effected by an extruder having a fan-tail extrusion nozzle, the layer or layers of the collagen being fed from a reel or reels to the confronting face or faces of the extrudate to form the product which is then passed through a nip provided by a pair of gauging rollers which consolidate the product and form it to a desired thickness.

In order that the invention may be fully understood, it will be described further, by way of example, with reference to the accompanying drawing which illustrates a preferred embodiment of the drape or wrap and apparatus for producing the same. The following description is, of course, illustrative and not restrictive of the scope of the invention. In the drawing:—

Fig. 1 is a diagrammatic fragmentary perspective view illustrating, exaggerately, a piece of a first embodiment of a drape or wrap according to the invention;

Fig. 2 is a diagrammatic side view illustrating a practical form of apparatus for producing the drape or wrap of Fig. 1;

Fig. 3 is a diagrammatic fragmentary perspective view illustrating, exaggerately, a piece of a second embodiment of the drape or wrap of the invention; and

Fig. 4 is a diagrammatic side view of a practical form of apparatus for producing the product of Fig. 3.

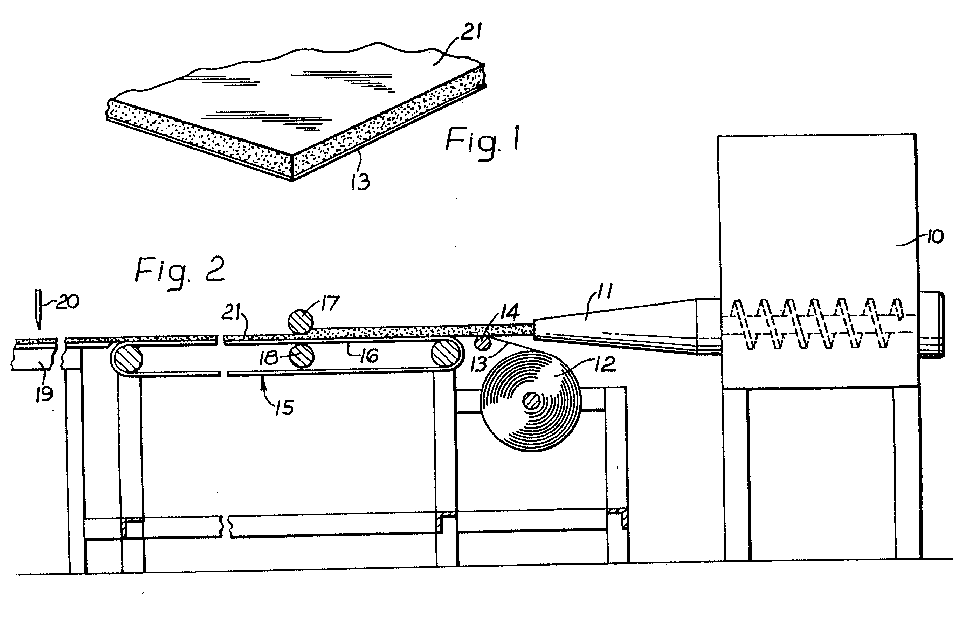

Referring firstly to Figs. 1 and 2 of the drawings, in preparing a preferred form of a drape or wrap for a roasting joint in accordance with the invention, one starts with random pieces of animal meat cut from a carcass (which may be ovine, bovine or porcine, or may be of poultry or game) and these are firstly passed through a grinder (not shown) to reduce the fat particles approximately to uniform size. Of course, it may be impossible to ensure that there is absolutely no lean meat present with the fat, so the references herein to fat respectively are not to be taken to mean that there may not be a very small proportion of lean meat present.

The particles from the grinder are passed through a rotary chopping machine (not shown), which reduces the particle size still further.

The product from the chopping machine is now mixed with a stabilizer or emulsifier and an antioxidant. As the stabilizer, use may be made of gelatine, added as a liquid solution in water, in the amount of 5 to 15% by weight of the total weight of the admixture, dependent upon the nature of the fat and the consistency of the resultant mixture. As antioxidant (which is optional) use may be made of butylated hydroxyanisole in an amount not exceeding 200 parts per million in the total weight of the mixture which is required to be a very viscous emulsion or paste capable of being extruded. As an alternative, use can be made of butylated hydroxytoluene, in the same proportions as the antioxidant.

If desired, further additives may be introduced. These may, for instance, be colourings, seasonings, spices and/or flavourings, for example salt, pepper, spices, artificial and natural fruit juices and extracts, cloves, sage, cinnamon, onion, chive, mint, in whatever quantities and compositions may be appropriate or desirable, for instance in the range of half-an-ounce to four ounces of additive to ten pounds of fat.

The emulsion or paste is now transferred to a mixer/auger type extruding machine such as illustrated diagrammatically at 10 in Fig. 2 of the drawings, fitted with a fan-tail type extrusion nozzle 11. This machine is fitted, below the extrusion nozzle 11 with a let-off reel 12 for a strip 13 of collagen film or membrane. The collagen film is preferably that commercially available in the meat processing industry under the Trade Name "Goldbeater".

Just in front of the extrusion nozzle 11 is a support roller 14 subsequent to which is a support conveyor 15 whose upper run 16 extends through a nip provided by a pair of gauging rollers 17, 18. Provided in alignment with the end, remote from the nozzle 11, of the conveyor 15, is a table 19 above which is a parting knife 20 which is reciprocable vertically for severing the eventual product as will be described shortly.

Upon operation of the extruding machine 10, the fat mass emerges from the nozzle 11 as a thin continuous web 21 (of which the thickness is shown exaggeratedly in Fig. 2) which passes onto the upper surface of the collagen strip 13 which it meets substantially in register with the support roller 14. The web 21 and strip 13 then pass together, onto the upper run 16 of the conveyor 15 by which they are conducted through the nip provided by the gauging rollers 17, 18. The pressure applied to the assembly, consisting of the fat web 21 and the collagen strip 13, serves to consolidate the same, ensuring that the fat web 21 adheres to the strip 13 and that the resultant product is substantially of constant thickness, for instance in the range from 1.5 to 4 or 5 mm.

From the upper run 16 of the conveyor 15, the consolidated product passes onto the table 21 at which it is cut into appropriately-sized sheet-like elements, the form of which is illustrated diagrammatically and to a considerably enlarged scale in Fig. 1, by reciprocating movement of the knife 20, which reciprocating movement may, if desired, be adapted to shift laterally in synchronism with the movement of the product during the short period of time during which it is actually in engagement with the product.

Where the product is being produced in a meat processing plant at which meat joints are being prepared, the elements, after being severed by the knife 20, may be passed directly to joint-preparation stations for immediate application as drapes or wraps to lean meat joints.

If it is required to stack the elements upon one another, use can be made of sheets or films (not shown) of non-stick or so-called "release" paper, one of which is provided upon the upper surface of each element before the next subsequent element is superimposed thereon. Such stacking may be effected both where the elements are required to be assembled into batches for distribution within the meat-processing plant, and where they are required to be stored and/or packaged for subsequent distribution to consumers, e.g. butchers and the like.

The function of the collagen in the product, prior to its being used, is to impart a handleability and integrity to the product, ensuring that it does not fall apart and can stand up to reasonable handling during manufacture, storage, packaging and subsequent use, without falling apart.

When prepared food in the form of a roasting joint, incorporating the product is cooked, the collagen becomes dissipated and is not evident or apparent in the final cooked food.

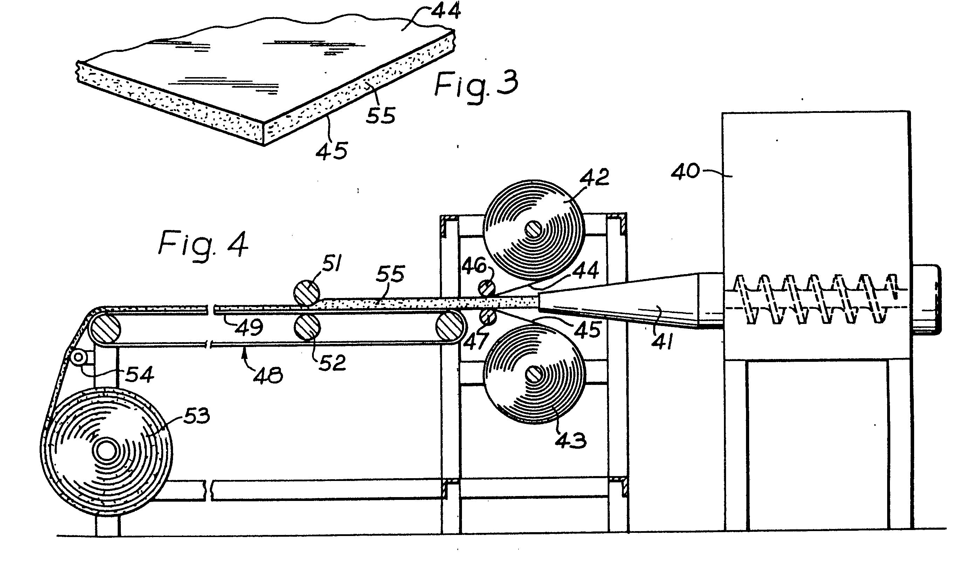

Referring now to Figs. 3 and 4, these figures are comparable respectively with Figs. 1 and 2, with Fig. 3 showing diagrammatically a second form of the product of the invention and Fig. 4 illustrating diagrammatically a machine for producing the product of Fig. 3.

As with what has been described above with reference to Figs. 1 and 2, for preparing the embodiment of the fat product shown in Fig. 1, one starts with random pieces of fat cut from a carcass (not shown) (which may again be ovine, bovine, porcine, poultry or game) which are treated in a grinder (not shown) to reduce them to particles of approximately uniform size. As before, the particles from the grinder are passed through a rotary chopping machine (not shown), which reduces the particle size further.

The product from the chopping machine is then mixed with a stabilizer or emulsifier and/or an antioxidant, and/or further additives, as in the preceding example, and, for instance, in the proportions therein recited, to result in an extrudable viscous emulsion or paste. This emulsion or paste is then filled into mixer/auger type extruding machine such as is illustrated diagrammatically at 40 in Fig. 4 fitted with a fan-tail extrusion nozzle 41. This machine is fitted, above and below the extrusion nozzle 41, with let-off reels 42 and 43 respectively, for respective strips 44 and 45 of collagen film or membrane. Aligned with the extrusion nozzle 41 is the nip of a pair of guide rollers 46, 47 subsequent to which is a support conveyor 48 whose upper run 49 is aligned with this nip and extends through a further nip provided by a further pair of gauging rollers 51, 52. Provided below the end, remote from the nozzle 41, of the conveyor 48 is a take-up reel 53, with an idler roller 54 therebetween. The collagen film is again preferably that commercially available in the meat-processing trade under the Trade Name "Goldbeater".

Upon operation of the extruding machine 40, the fat emulsion or paste emerges from the nozzle 41 as a thin continuous web 55 to the upper and lower surfaces of which the collagen films 44 and 45 are applied by the guide rollers 46, 47, so that the two collagen layers 44, 45 with the fat 55 sandwiched therebetween then passes through the gauging roller nip. The pressure applied to the sandwich by the gauging rollers 51, 52 serves to consolidate the resultant sandwich-like product, a portion of which is illustrated exaggeratedly in Fig. 3, and to ensure that it is substantially of constant thickness, and the product is then wound up on the take up roll 53.

The product is stored, as desired, at a suitably low temperature for preservation prior to use and/or distribution.

The product is used, eventually, in exactly the same way as is unprocessed animal fat used as wrap or drape for prepared joints. The collagen films or membranes 44, 45 ensure that the product does not fall apart and provide surface strength to withstand tying or netting if required. It is, of course, quite pliable and can be caused to lie closely against the outer surface of meat of a joint being wrapped, and in general will tend to adhere by itself to the joint. It will, of course, readily adhere to itself, so that a drape or wrap which extends right around a joint and overlaps itself will, in general, not require to be tied or netted in place. This will, in many instances, apply also where the drape or wrap extends only partially around the joint but there may then be cases where tying or netting is still necessary. In the instances where the tying or netting is eliminated, this can represent a significant saving both in materials and labour. The wrapped joint is clean and dry, eliminating the need for any stickiness to be cleaned off.

It is also of significance that the wrap or drape, initially present on a joint before cooking, serves during the cooking of the joint, to provide an appropriate supply of molten fat for the cooking operation, without the need for basting, and is gradually dissipated by the cooking so that only a minimum of residue from the drape or wrap remains on the cooked joint. The molten liquid from the wrap, of course, becomes part of the gravy from the cooking, and enriches such gravy.

As practical examples in preparing products in either of the two foregoing cases as described with reference to Figs. 1 and 2 and Figs. 3 and 4, the emulsion or paste may be extruded as a continuous web of about 6 inches (15 cm) in width and about ⅛th of an inch (about 3 mm) in thickness, with the collagen support layer or facing layers being, for example, about 0.1 mm in thickness and the gauging rollers 17, 18 or 51, 52 serving to consolidate the sandwich-like product to about 2.0 mm in thickness.

In the case of the product prepared according to Figs. 3 and 4, this may be cut into predetermined lengths, e.g. of about 18 inches (50 cms) instead of being rolled; similarly the product of Figs. 1 and 2 may be rolled up if desired for storage and/or transportation, provided appropriate precautions are taken to prevent the superimposed layers from adhering to one another, e.g. by the interposition of a release paper separating web.

The invention is not confined to the precise details of the foregoing examples and variations may be made thereto. For instance, the preparation of the product, which essentially comprises the particulate animal fat supported upon a collagen layer or sandwiched between collagen layers, may be effected in any suitable manner, and may even be effected by hand. The product may be thicker (e.g. up to about half-an-inch or 1.25 cms) than described and may be prepared in large sheets for cutting up to size as desired.

In some instances, dependent upon the nature of the fat itself, it may not be necessary to add gelatine thereto to form a paste or emulsion, the treatment of the fat to convert it to particulate form being sufficient to produce the paste or emulsion or otherwise to render it readily extrudible. When gelatine is added as stabiliser, this can be added as a sol or gel in cold or hot water, or as a mixture with soft fats. Obviously where the fat used is a hard fat, such as suet, this will require a greater addition of gelatine than would a softer fat, to achieve the desired pasty or extrudible consistency.

The use of antioxidant is not essential to the method of the invention, and this can be omitted. Where antioxidant is used, this may alternatively be butylated hydroxytoluene.

## Claims

1. A drape or wrap for a roasting joint comprising an element of animal fat characterised in that it comprises a support or facing layer (13, 45) of collagen film or membrane serving as a carrier for and to which is adhered a fat layer (21, 55) comprising animal fat ground and/or chopped or similarly treated to reduce it to particulate form, the collagen layer imparting integrity to the product.

2. A drape or wrap as claimed in claim 1, wherein the fat layer (21, 55) includes a stabilizer.

3. A drape or wrap as claimed in claim 2 wherein the stabilizer is gelatine.

4. A drape or wrap as claimed in claim 3 wherein the gelatine is present in an amount from 5 to 15% by weight of the total weight of the fat.

5. A drape or wrap as claimed in any preceding claim wherein the fat layer includes an antioxidant.

6. A drape or wrap as claimed in claim 5 wherein the antioxidant is butylated hydroxyanisole or butylated hydroxytoluene present in an amount not exceeding 200 parts per million, of the total weight of the filling.

7. A drape or wrap as claimed in any preceding claim wherein the fat layer (21, 55) includes an additive comprising colouring and/or seasoning and/or spice and/or flavouring.

8. A drape or wrap as claimed in any preceding claim wherein the fat layer (21, 55) has the collagen layer on one face and a release sheet on the other face, to enable a plurality of the drapes or wraps to be superimposed upon one another.

9. A drape or wrap as claimed in any of claims 1 to 7 which comprises two of said support or facing layers (44 and 45) of collagen film or membrane, between which is sandwiched a filling of the fat (55).

10. A drape or wrap as claimed in any preceding claim and which is prepared in the form of a continuous strip or web which is subsequently severed into appropriate lengths.

11. A drape or wrap as claimed in any preceding claim wherein the fat layer (55) is in the form of a paste extrusion.

## Patentansprüche

1. Hülle für Fleischbraten mit einem Anteil von tierischem Fett, dadurch gekennzeichnet, daß sie eine Trag- oder Oberflächenschicht (13, 45) aufweist, die aus einem Film oder einer Membrane aus Knorpelmasse besteht, die als Träger dient und an welcher eine Fettschicht (21, 55) haftet, die tierisches Fett in Grundform und/oder zerkleinert oder ähnlich behandelt, um es in eine besondere Form zu bringen, aufweist, wobei der Knorpelmassefilm das Erzeugnis zusammenhält.

2. Hülle nach Anspruch 1, dadurch gekennzeichnet, daß die Fettschicht (21, 55) ein Stabilisier-ungsmittel enthält.

3. Hülle nach Anspruch 2, dadurch gekennzeichnet, daß als Stabilisierungsmittel Gelatine dient.

4. Hülle nach Anspruch 3, dadurch gekennzeichnet, daß die Gelatine mit einem Gewichtsanteil von 5—15% des Gesamtgewichtes des Fettes vorhanden ist.

5. Hülle nach einem der vorangehenden Ansprüche, dadurch gekennzeichnet, daß die Fettschicht ein Antioxydationsmittel enthält.

6. Hülle nach Anspruch 5, dadurch gekennzeichnet, daß das Antioxydationsmittel Butylin-Hydroxyanisol oder Butylin-Hydroxytoluol ist, dessen Anteil zweihundert Teile pro einer Million Teile des Gesamtgewichts der Füllung nicht übersteigt.

7. Hülle nach einem der vorangehenden Ansprüche, dadurch gekennzeichnet, daß die Fettschicht (21, 55) einen Zusatz zur Farbgebung und/oder zum Würzen und/oder zur Geschmacksbildung aufweist.

8. Hülle nach einem der vorangehenden Ansprüche, dadurch gekennzeichnet, daß die Fettschicht (21, 55) den Knorpelmassefilm auf ihrer einen Seite und ein Deckblatt auf ihrer anderen Seite aufweist, so daß mehrere Hüllen übereinandergestapelt werden können.

9. Hülle nach einem der Ansprüche 1 bis 7, dadurch gekennzeichnet, daß sie zwei dieser Stütz- oder Oberflächenschichten (44 und 45) aus Knorpelmassefilm oder als Knorpelmassemembrane aufweist, zwischen denen sich die Fettfüllung (55) befindet.

10. Hülle nach einem der vorangehenden Ansprüche, dadurch gekennzeichnet, daß sie in der Form eines fortlaufenden Strangers gebildet ist, der nachfolgend in Stücke passender Länge geteilt wird.

11. Hülle nach einem der vorangehenden Ansprüche, dadurch gekennzeichnet, daß die Fettschicht (55) in Form einer Extrudierpaste vorliegt.

## Revendications

1. Barde ou parement pour rôti comprenant un élément de graisse animale, caractérisé par le fait qu'il comprend une couche support ou extérieure (13, 45) faite d'un film ou d'une membrane de collagène servant de support, ou à laquelle est collée, une couche de graisse (21, 55) qui comprend de la graisse animale broyée et/ou découpée ou traitée de façon analogue pour la réduire à une forme particulaire, la couche de collagène conférant de l'intégrité au produit.

2. Barde ou parement selon la revendication 1, dans lequel la couche de graisse (21, 55) contient un stabilisant.

3. Barde ou parement selon la revendication 2, dans lequel le stabilisant est une gélatine.

4. Barde ou parement selon la revendication 3, dans lequel la gélatine est présente en une proportion de 5 à 15% en poids du poids total de la graisse.

5. Barde ou parement selon l'une quelconque des revendications précédentes, dans lequel la couche de graisse comprend un anti-oxydant.

6. Barde ou parement selon la revendication 5, dans lequel l'anti-oxydant est un hydroxyanisol butylé ou un hydroxytoluène butylé, présent en une proportion qui n'excède pas 200 parties par million du poids total du remplissage.

7. Barde ou parement selon l'une quelconque des revendications précédentes, dans lequel la couche de graisse (21, 55) comprend un additif qui est constitué par un colorant et/ou un assaisonnement et/ou des épices et/ou un condiment.

8. Barde ou parement selon l'une quelconque des revendications précédentes, dans lequel la couche de graisse (21, 55) porte la couche de collagène sur une face et une feuille anti-adhésive sur l'autre face, pour permettre de superposer une pluralité de bardes ou recouvrements l'un sur l'autre.

9. Barde ou parement selon l'une quelconque des revendications 1 à 7, qui comprend deux desdites couches supports ou extérieures (44 et 45) faites d'un film ou d'une membrane de collagène, entre lesquelles est interposé un remplissage formé de la graisse (55).

10. Barde ou parement selon l'une quelconque des revendications précédentes, qui est préparé sous la forme d'une bande ou feuille continue qui est ensuite découpée en longueuers appropriées.

11. Barde ou parement selon l'une quelconque des revendications précédentes, dans lequel la couche de graisse (55) se présente sous la forme d'une extrusion de pâte.

Fig. 1

Fig. 2

Fig. 3

Fig. 4